# EUROPÄISCHE PATENTSCHRIFT

(11) **EP 3 426 434 B1**
(45) Veröffentlichungstag und Bekanntmachung des Hinweises auf die Patenterteilung: **01.11.2023**
(21) Anmeldenummer: 17708846.5
(22) Anmeldetag: 10.03.2017
(51) Int. Cl.: B23Q 1/70, B23B 29/034, B23Q 27/00, B23Q 5/34

(54) **WERKZEUGSPINDEL**
TOOL SPINDLE
BROCHE D'OUTIL

(30) Priorität: 11.03.2016 EP 16159864
(43) Veröffentlichungstag der Anmeldung: 16.01.2019
(73) Patentinhaber: Niles-Simmons-Hegenscheidt GmbH, 09117 Chemnitz (DE)
(72) Erfinder: KOCHSIEK, Adolf, 33818 Leopoldshöhe (DE)
(74) Vertreter: Brinkmann & Partner
(86) Internationale Anmeldenummer: PCT/EP2017/055744
(87) Internationale Veröffentlichungsnummer: WO 2017/153596

(56) Entgegenhaltungen:
- EP-A1- 0 922 528
- GB-A- 835 660
- JP-A- S61 173 802
- JP-A- 2011 104 704

## Beschreibung

Die vorliegende Erfindung betrifft eine Werkzeugspindel mit einem Spindelgehäuse, einem Drehantrieb, welcher einen Antriebsmotor umfasst, wobei der Antriebsmotor auf eine rotierende Antriebswelle wirkt, und einer um die Antriebwelle drehbar angeordneten Werkzeugaufnahmeeinheit, welche über eine Getriebekette mit der Antriebswelle verbunden und innerhalb des Spindelgehäuses und diesem gegenüber bewegbar angeordnet ist, sowie mit einer Werkzeugverstelleinrichtung, die eine Werkzeugverstelleinheit und die Werkzeugaufnahmeeinheit umfasst, wobei die Werkzeugverstelleinheit die Werkzeugaufnahmeeinheit trägt. Derartige Werkzeugspindeln werden in Maschinen zur spanenden Bearbeitung von Werkstücken eingesetzt und dienen der Aufnahme von Bearbeitungswerkzeugen. Die Bearbeitungswerkzeuge werden üblicher Weise über eine in der Werkzeugspindel befindliche Werkzeugschnittstelle aufgenommen und fest eingespannt. Eine gattungsgemäße Werkzeugspindel ist aus der EP 0 922 528 A1 bekannt.

Im Stand der Technik bekannt sind die unterschiedlichsten Vorrichtungen zur spanenden Bearbeitung von Werkstücken. Zum einen gehören dazu Drehmaschinen. Bei diesen wird das Werkstück gedreht, während das Werkzeug feststehend sowohl axial als auch radial gegenüber dem Werkstück bewegt wird. Mit diesem Verfahren werden runde, rotationssymmetrische Konturen aus dem Werkstück herausgearbeitet.

Weiterhin bekannt sind Bohrmaschinen, bei welchen ein Bohrer rotiert und gegenüber einem feststehenden Werkstück vorgetrieben wird. Auf diese Weise entstehen im Werkstück Bohrungen.

Weiterhin bekannt sind Fräsmaschinen. Ein rotierender Fräskopf wird gegenüber einem feststehenden Werkstück radial und axial bewegt und erzeugt auf diese Weise Fräsnuten, Fräsflächen, Freiformflächen und dergleichen im Werkstück.

Es ist auch bekannt, entsprechende Werkzeugspindeln in Bearbeitungszentren einzusetzen. Diese werden dann automatisch mit entsprechenden Werkzeugen bestückt.

Schlussendlich sind auch Maschinen zur Herstellung unrunder Konturen bekannt. Man spricht vom sogenannten Unrunddrehen. Sowohl ein drehendes Werkzeug mit einem

Schneidkopf als auch das drehende Werkstück werden hinsichtlich ihrer Umdrehungen relativ zueinander gesteuert. Damit werden an dem Werkstück unrunde Konturen erzeugt. Derartige Verfahren sind beispielsweise bekannt aus EP 0 097 346 A1 oder EP 0 907 458 B2.

In der Regel umfasst eine Werkzeugspindel einen Drehantrieb, zum Beispiel einen Antriebsmotor, eine rotierende Antriebsachse, die von dem Antriebsmotor angetrieben wird, sowie nach einer Getriebekette eine Abtriebsachse, in welche eine Werkzeugaufnahme integriert ist. In einer derartigen Spindel ist die Mitte der Abtriebsachse zugleich die Werkzeugmitte. Setzt man einen Bohrer oder einen Fräser ein, kann man entsprechende Bearbeitungen durchführen. Derartige vorbekannte Spindeln können nicht zum Unrunddrehen eingesetzt werden, da die Werkzeugschneide nicht auf ihrem Flugkreis relativ zur Werkzeugspindelmitte bewegt werden kann.

Um mit derartigen Vorrichtungen zu Drehen, muss ein Werkzeug mit seiner Schneide ausgerichtet und die Abtriebsachse von der Antriebsachse entkoppelt und geklemmt werden oder der Antrieb in einen Lagerregelungsmodus versetzt werden. Beim Drehen wirken erhebliche Momente und Kräfte auf das Schneidwerkzeug, und zwar sowohl radial als auch axial, welche von dem System aufgenommen werden müssen.

Bei Unrunddrehvorrichtungen wiederum wird ein Werkstück in eine Werkstückspindel eingespannt und rotiert um eine Werkstückdrehachse. Das Werkzeug seinerseits sitzt in einer Werkzeugspindel und dreht um eine Werkzeugdrehachse. Die Spindeln sind in an sich bekannter Weise auf Schlitten und Schiebern angeordnet, sodass axiale und radiale Relativbewegungen zwischen Werkstück und Werkzeug durchgeführt werden können. Das Werkzeug seinerseits bewegt sich nicht zwingend um eine zentrische Achse bezogen auf das Werkstück, sondern führt auch Drehbewegungen um eine einstellbare exzentrische Achse durch. Zusätzlich kann ein sogenannter Werkzeugflugkreis verändert werden. Durch die unterschiedlichen Verstellungen wird Einfluss genommen auf die Anzahl der Ecken in der unrunden Kontur (Drehzahlverhältnisse), die Eindringtiefe der Werkzeuges (Flugkreis) usw.

Mit Unrunddrehvorrichtungen kann man zwar grundsätzlich auch Bohren und Fräsen sowie normal Drehen, indem man wie bei herkömmlichen Vorrichtungen die Drehachsen entsprechend konstant hält, allerdings wirken beim Bohren und Fräsen sämtliche Kräfte auf die Lageregelung der Achsen und beim Drehen erhebliche Torsions- und Querkräfte auf die Vorrichtung, sodass keine exakte industrielle Fertigung möglich ist.

Vorbekannte Vorrichtungen zum Unrunddrehen sind hinsichtlich der möglichen Drehzahlen beschränkt, da es mit steigenden Drehzahlen zu erheblichen Auswirkungen von Unwucht kommen kann. Darüber hinaus sind sie hinsichtlich des Einsatzfalles beschränkt, weil eine Kühlmittelzuführung von außen nur unzureichenden Effekt hat. In vielen Einsatzfällen ist die Steifigkeit der Anlagen nicht ausreichend.

Mit herkömmlichen Drehmaschinen und Bearbeitungszentren, welche drehen bohren fräsen können, sind Bearbeitungsgrenzen gesetzt. Weder können konische noch stufenförmige Formen gefertigt werden, es lassen sich nicht ohne weiteres Fasen herstellen. Unrunde Teile können überhaupt nicht gefertigt werden. Feinstkorrekturen beispielsweise durch das Ausdrehen von geringfügig zu kleinen Bohrungen oder dergleichen sind ebenfalls nicht möglich. Setzt man in herkömmliche Werkzeugspindeln in Art eines eingesetzten Werkzeugs eine Zusatzeinrichtung ein, wird wohl ein Unrunddrehen ermöglicht, erhöht man jedoch die Baugröße automatisch und macht damit den üblicherweise automatischen Werkzeugwechsel unmöglich. In anderen Worten, es erfordert Rüstarbeit und durch das Umrüsten entsprechende Ausfallzeiten, zusätzlich geht Bearbeitungsbauraum verloren, was die Verwendungsmöglichkeit der Maschine einschränkt. Darüber hinaus ist eine derartige Anordnung nicht ausreichend steif für die auftretenden Kräfte und hinsichtlich der Bearbeitungszeit beziehungsweise Drehgeschwindigkeiten beschränkt.

Eine Bearbeitungsmaschine ist in der US 4,370,080 A beschrieben. Diese verfügt über drei Antriebe, die zu unterschiedlichen Zwecken verwendet werden. Ein Antrieb 23 dient der Gesamtrotation der Einheit, ein Antrieb 66 der Werkzeugrotation und ein Antrieb 45 der Werkzeugverschwenkung. Das Werkstück rotiert durch eine doppelte Rotation einer Spindel in einer Spindel durch die Kombination der Antriebe 23 und 66 bewirkt. Eine direkte Verstellung ohne weitere Übertragungselemente, Getriebe und dergleichen ist nicht möglich. Darüber hinaus werden zwei getrennte Wellen gekoppelt. Die Vorrichtung ist insgesamt sehr komplex und kostenintensiv und hat insbesondere einen schwer zu steuernden Aufbau, der eine präzise industrielle Produktion behindert.

Eine entsprechende Bearbeitungsmaschine ist aus der DE 103 48 801 B3 beschrieben.

Durch die Ansteuerung von zwei Antrieben wird sowohl eine Werkzeugrotation als auch eine Verstellung realisiert. Hierzu werden zwei Spindeln relativ verdrehbar eingesetzt, was die Vorrichtung komplex und kostenintensiv macht. Darüber hinaus ist die Steuerung schwierig, da diese durch Differenzdrehzahlen gesteuert wird. Weiterhin ist eine Verdrehsperre erforderlich. Insgesamt ist die Vorrichtung vorrangig zum Bohren konzipiert und geeignet.

Aus der DE 24 22 948 A1 ist eine Bearbeitungsmaschine zur Herstellung von Nuten mittels Fräsverfahren bekannt. Hier werden zwei Spindeln relativ zueinander bewegt und ebenfalls über eine Differenzdrehzahl gesteuert. Die Nutenbearbeitung findet mittels taumelfräsen statt.

Aus dem Stand der Technik bekannte Vorrichtungen sind hinsichtlich auftretender Unwuchten empfindlich und schwer zu kontrollieren. Weiterhin werden externe Kühlschmierstoffzuleitungen erforderlich. Je nach Bearbeitung sind Achsen zu klemmen oder zu sperren und durchgängig ist ein automatischer Werkzeugwechsel nicht möglich.

Ausgehend vom vorbeschriebenen Stand der Technik liegt der Erfindung die **Aufgabe** zugrunde, eine Werkzeugspindel bereitzustellen, welche multifunktional einsetzbar ist, mit der also sowohl herkömmliche Bearbeitungen wie Bohren und Fräsen sowie Drehen als auch neuartige Bearbeitungen wie Unrunddrehen jeweils ohne Schaden für die Spindel und mit hoher industrieller Fertigungsqualität durchführbar sind. Dabei ist großer Wert auf eine kompakte Bauform zu legen um den Bearbeitungsraum nicht einzuschränken.

Zur technischen **Lösung** wird mit der Erfindung vorgeschlagen eine Werkzeugspindel mit den Merkmalen des Anspruchs 1. Weitere Vorteile und Merkmale ergeben sich aus den Unteransprüchen.

Gemäß der Erfindung wird also eine herkömmliche Werkzeugspindel so weitergebildet, dass diese nicht nur verbessert für die bisherigen Aufgaben einsetzbar ist, das heißt bohren, drehen, fräsen, sondern darüber hinaus in Verbindung mit der Hauptspindel unrund drehen kann. Dabei wird die Baugröße nicht erhöht, automatische Werkzeugwechsel sind ohne weiteres möglich und die neuartige Werkzeugspindel wird multifunktional.

Erfindungsgemäß ist die Werkzeugverstellvorrichtung in der Antriebswelle der Werkzeugspindel untergebracht. Diese Werkzeugverstellvorrichtung enthält eine Werkzeugverstelleinheit, die gegenüber der Antriebswelle bewegbar ist, wobei nicht die Drehung um die Antriebswelle gemeint ist, sondern parallel oder quer zur Antriebswelle verschiebbar, verschwenkbar und dergleichen. Auch umfasst sie eine Werkzeugaufnahmeeinheit, in welcher ein Werkzeug einsetzbar ist.

Mit der Erfindung wird vorgeschlagen, dass die Werkzeugaufnahmeeinheit eine Verstelleinheit aufweist, die gegenüber der Antriebswelle um eine quer oder parallel zur Antriebswelle liegende Achse bewegbar ist.

Durch diese erfindungsgemäße Ausgestaltung ergeben sich nun eine Reihe von Vorteilen. Es ist nun möglich, die Verstelleinheit relativ zur Antriebswelle festzusetzen, also zu verriegeln oder stufenlos zu verklemmen. Auf diese Weise sind beim Bohren und Fräsen keine Auswirkungen auf die Lageregelung und die Achsen zu befürchten. Die Präzision und die Steifigkeit der Werkzeugeinspannung werden damit erhöht.

Es lässt sich ohne weiteres ein direktes Messsystem integrieren, wobei auch möglich ist, die Messsystemsignale berührungslos zu übertragen.

Die Werkzeugaufnahme kann so ausgebildet sein, dass sie einen automatischen Werkzeugwechsel ermöglicht, indem eine entsprechende automatische Spanneinrichtung integriert wird. Der korrekte Sitz des Werkzeugs kann durch eine Einrichtung kontrolliert werden, die erkennt, wenn das Werkzeug gespannt ist.

Der Antrieb der Verstelleinheit kann als hydraulischer Antrieb ausgeführt sein. So kann beispielsweise die Position der Werkzeugschneide hydraulisch gesteuert werden.

Durch die Ausgestaltung der Werkzeugspindel, insbesondere der Antriebswelle ist es möglich, Kanäle für Hydraulik, Pneumatik und insbesondere für die Zuführung von Kühlmittel durch die Spindel vorzusehen.

Ein zylindrisches Spindelgehäuse bietet definierte Bedingungen für Einbauten, Modularisierung und Zusatzeinheiten.

Es ist ohne weiteres möglich, eine Unwuchtkompensation durchzuführen.

Durch die Möglichkeit der mechanischen Klemmung bzw. Verriegelung der Werkzeugverstelleinheit, kann eine extrem steife Verbindung realisiert werden, was insbesondere beim Fräsen und Bohren die Erzielung optimaler Ergebnisse ermöglicht. Dabei kann gemäß einem vorteilhaften Vorschlag der Erfindung die Verriegelung als Kugelringverriegelung ausgestaltet sein. Diese Verriegelung verriegelt die Aufnahmeeinheit gegenüber der Antriebswelle. Eine weitere Verriegelung oder stufenlose Verklemmung der Antriebswelle an sich ermöglicht es, eine Steife der Wellenübertragungen und Lager zu erzielen, die beim Drehen, also bei feststehender Werkzeugspindel, auch beim Einsatz mehrschneidiger Werkzeuge extrem unterstützt, da es hierbei besonders auf Steifigkeit ankommt. Auf diese Weise lassen sich sogenannte Minirevolverköpfe realisieren, die den Werkzeugwechsel erheblich verkürzen und darüber hinaus die Anzahl der Werkzeuge im Werkzeugmagazin erhöhen. Auch diese Verriegelung kann als Kugelringverriegelung, stufenlose Verriegelung oder Kombination beider ausgestaltet sein.

Die erfindungsgemäße Spindel kann in konventionellen Drehmaschinen eingesetzt werden. Sie wird dort als zusätzliche Spindel ergänzt. Dadurch wird die Drehmaschine multifunktional, d.h. sie verfügt nun über ein leistungsfähiges angetriebenes Werkzeug für den Einsatz zum Fräsen und Bohren, es wird die Herstellung außermittiger Formbohrungen oder -zapfen ermöglicht und schlussendlich die Herstellung von unrunden Wellen und Naben. Darüber hinaus bleiben alle Funktionen der Grundmaschine an sich vollständig erhalten.

Die erfindungsgemäße Spindel kann auch in herkömmlichen Bearbeitungszentren eingesetzt werden. Hier wird die Werkzeugspindel des Bearbeitungszentrums durch die erfindungsgemäße Werkzeugspindel ersetzt. Üblicherweise ist das Werkstück bei Bearbeitungszentren fest eingespannt und rotiert im Gegensatz zur Drehmaschine nicht.

Durch den Einsatz der erfindungsgemäßen Spindel in konventionellen Bearbeitungszentren wird das Funktionsspektrum des Zentrums deutlich erhöht. Zum einen wird Drehmaschinenfunktionalität in ein Bearbeitungszentrum integriert. Es können nunmehr mit einem Werkzeug Bearbeitungen durchgeführt werden, die ansonsten in der Maschine gar nicht oder nur mit extrem hohem Werkzeugeinsatz durch die Verwendung vieler unterschiedlicher Bearbeitungswerkzeuge durchführbar wären. Dies basiert auf der Leistungsfähigkeit der erfindungsgemäßen Spindel in Bezug auf Drehzahl, Drehmoment und die Verstellwege.

Bei dem Einsatz der Spindel in modernen Dreh-/Fräszentren wird die Dreh-/Frässpindel des Zentrums durch die erfindungsgemäße Spindel ersetzt. Dreh-/Fräszentren kombinieren die Funktionen von Drehen und Fräsen in einer Maschine. Dabei wird ein Werkstück in ein Spannfutter einer Hauptspindel gespannt. Es rotiert oder kann stillstehend bearbeitet werden. Fräsen wird im Stand oder bei langsamer Drehung ermöglicht. Durch den Einsatz der erfindungsgemäßen Spindel in einer solchen Maschine ist es nun möglich, unrunde Wellen und Naben herzustellen, darüber hinaus auch außermittige Formbohrungen oder -zapfen zu erzeugen. Weiterhin wird die Minirevolverfunktion unterstützt und es werden steifere und stabilere Verriegelungen beim Drehen und Fräsen bereitgestellt, ohne die Grundfunktionen der Maschine zu beeinträchtigen, oder den Bearbeitungsraum einzuschränken.

Die erfindungsgemäße Werkzeugspindel bietet gegenüber dem Stand der Technik erhebliche Vorteile. In der sogenannten Drehdurchführung, das heißt der zentralen Durchführung laufen in erster Linie Hydraulikleitungen. Diese dienen der Bereitstellung von Hydraulikdruck zur Verriegelung und Bewegung der Werkzeugverstellachse der Verstelleinrichtung. Weiterhin wird der Hydraulikdruck für die sogenannte Werkzeugspannung bereitgestellt, mit welchem das Werkzeug fest arretiert wird. Hydraulikdruck für eine Unwuchtkompensation wird ebenfalls bereitgestellt, wenn diese vorhanden ist. Dabei können beispielsweise Ringsegmente, d.h. Unwuchtkompensationsscheiben in entsprechenden Ringnuten verstellt werden. Mit hohem Druck kann Kühl-/Schmierstoff bereitgestellt werden, der ebenfalls durch die Drehdurchführung bereitgestellt wird. Darüber hinaus wird pneumatischer Druck für die Werkzeuganlagekontrolle hindurchgeführt und schließlich Leitungen für das Messsystem, und zwar sowohl Energie- als auch Signalleitungen.

In vorteilhafter Weise kann das Messsystem die Signale per Funk übertragen, so dass eine zentrale Steuerung die Signale in hoher Geschwindigkeit erhalten kann. Durch die berührungslose Übertragung sind höhere Drehzahlen möglich, die Übertragung ist wartungsfrei. Zum Unrunddrehen und für die Ausnutzung moderner Werkzeuge sind hohe Drehzahlen erforderlich.

Weitere Vorteile und Merkmale der Erfindung ergeben sich aus der folgenden Beschreibung anhand der Figuren. Dabei zeigen:
- Fig. 1: eine schematische teilgeschnittene Ansicht eines Ausführungsbeispiels einer erfindungsgemäßen Werkzeugspindel;
- Fig. 2: eine Ansicht der Werkzeugaufnahmevorrichtung gemäß Fig. 1;
- Fig. 3: eine vergrößerte Darstellung eines Ausführungsbeispiels einer erfindungsgemäßen Werkzeugspindel im Frontbereich;
- Fig. 4: die Darstellung der erfindungsgemäßen Werkzeugspindel im Überblick und
- Fig. 5: eine Draufsicht auf die Spindel gemäß Figuren 3 und 4.

In den Figuren sind gleiche Elemente mit gleichen Bezugszeichen versehen. Es handelt sich um rotationssymmetrische Baugruppen, so dass zum Zwecke der besseren Überschaubarkeit die Elemente auf einer Seite einer Mittellinie mit Bezugszeichen versehen sind.

Ein Ausführungsbeispiel für eine erfindungsgemäße Werkzeugspindel 1 umfasst ein Spindelgehäuse 2 mit einer entsprechenden Anbaueinheit 3. Mit der Anbaueinheit 3 kann die Werkzeugspindel 1 in an sich bekannter Weise auf Schlitten, Schiebern, Schwenklagern und dergleichen je nach Maschine und Einsatzfall angeordnet werden. Alternativ kann die Werkzeugspindel auch in einer von der Werkzeugmaschine bereitgestellten Aufnahmehülse untergebracht werden.

Innerhalb des Gehäuses 2 ist eine Antriebsgruppe 4 mit einem entsprechenden Motor ausgebildet. Letztendlich werden die Antriebskräfte auf eine Antriebswelle 5 - kurz auch Welle genannt - aufgebracht.

Eine Werkzeugverstellvorrichtung 6 ist direkt in die Welle 5 integriert, in welche eine Werkzeugverstelleinheit 14 integriert ist. Eine Art Verschluss 15 wird von einer Werkzeugaufnahmeeinheit 11 durchragt. Eine Werkzeugschnittstelle nimmt ein Bearbeitungswerkzeug auf. Die Werkzeugverstellvorrichtung 6 ist direkt in die Welle 5 integriert , sodass die Vorrichtung in Drehbewegung versetzt werden kann. Mittels der Kolbenbaugruppe 12 kann die Werkzeugverstelleinheit 14 um eine quer zur Antriebsachse bzw. quer zur Werkzeugdrehachse liegenden Achse verstellt werden. Befindet sich in der Werkzeugaufnahmeeinheit 11 beispielsweise ein Werkzeug mit einer Schneidplatte, kann durch Verstellen der Flugkreisradius der rotierenden Schneidplatte verändert werden.

An der Werkzeugverstelleinheit 14 ist ein Meßsensorbereich 10 angeordnet.

Die auf entsprechenden Schlitten und Schiebern sowie Schwenkeinrichtungen angeordnete Spindel 1 kann gegenüber einem feststehenden oder einem drehenden Werkstück relativ axial, radial und in sonstiger je nach Einsatzfall gewünschter Weise verschoben werden. Entsprechend kann das Werkzeug an die Oberfläche des Werkstücks zur entsprechenden Bearbeitung herangeführt werden. Als Werkzeug kann in die Werkzeugaufnahmeeinheit 11 auch ein einfacher Bohrer eingesetzt werden ebenso wie ein Fräser, gegebenenfalls unter Zwischenanordnung von Adaptern, Bohrfuttern und dergleichen. In diesem Fall ist es sinnvoll, die verstellbare Werkzeugverstelleinheit 14 gegen Verstellen zu verriegeln bzw. zu klemmen.

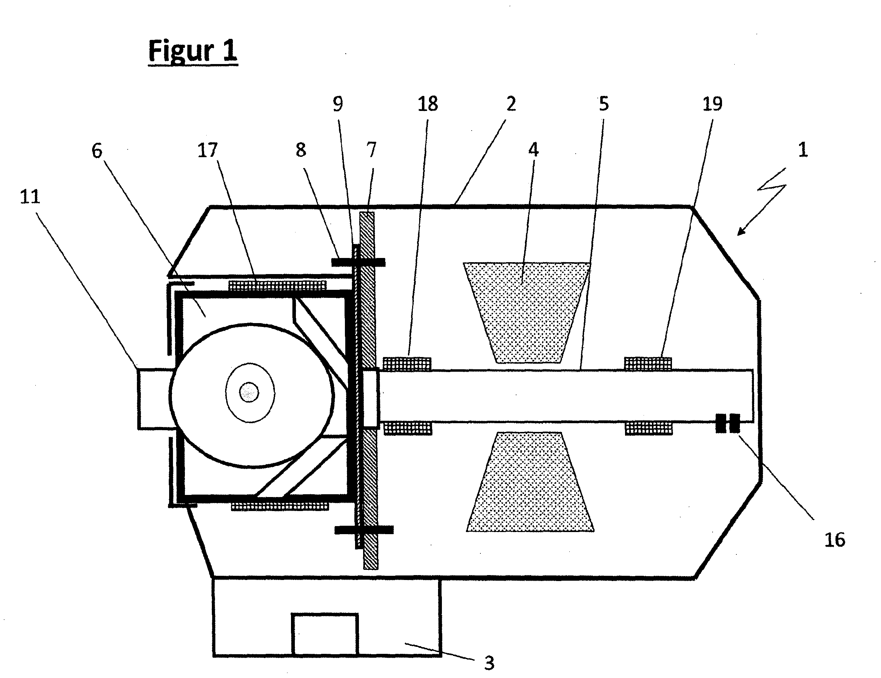

Im Inneren der Spindel ausgeführte Kanäle dienen der Führung von Hydraulik, Pneumatik und auch Kühlmittel, wozu entsprechende nicht gezeigte Anschlüsse vorgesehen sind. Über Anschlüsse 16 eines elektrischen Messsignalverteilers erfolgt eine Übertragung der Messsignale des Messsystems 10 an eine in den Figuren nicht näher gezeigte Steuerung. Wie insbesondere die Darstellung nach Fig. 1 erkennen lässt, erfolgt die Lagerung der Welle 5 der Spindel über eine Spindellagerung, die im gezeigten Ausführungsbeispiel über Kugellager 17, 18 und 19 verfügt.

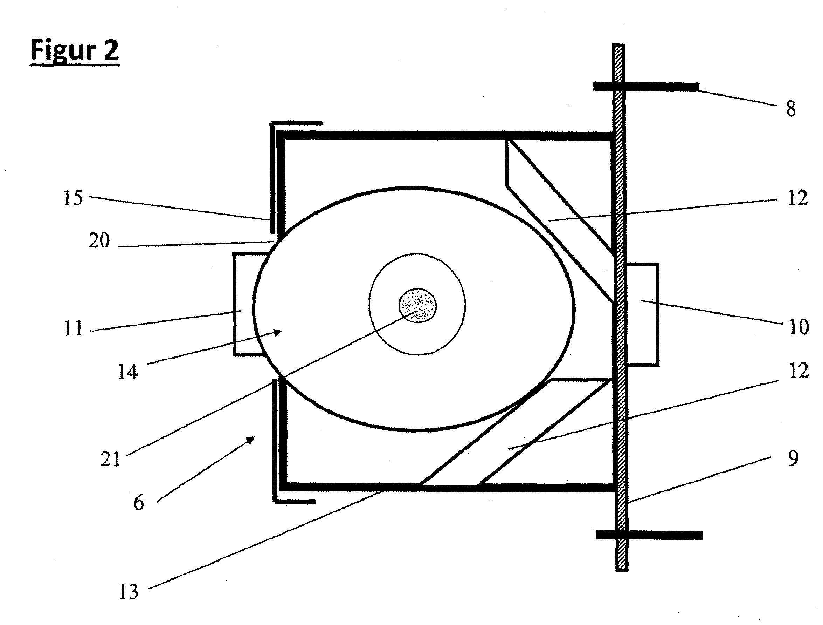

Die Werkzeugverstelleinheit 14 verschwenkt gegenüber der Welle 5 um die Schwenkachse 21, wie Figur 2 erkennen lässt. Der diesbezüglich maximale Schwenkbereich ist mit dem Bezugszeichen 20 identifiziert.

Erfindungsgemäß ist die verstellbare Werkzeugaufnahmeeinheit 11 in einem Gehäuse 13 angeordnet. Dieses ist mit einem Montageflansch 9 verbunden, welcher mittels Befestigungsschrauben 8 an einer spindelseitigen Basisplatte 7 befestigbar ist.

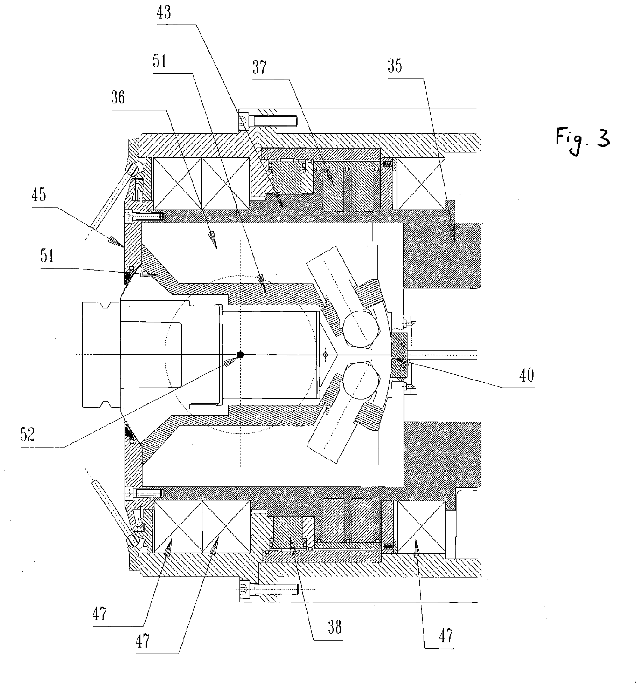

Die Figuren 3, 4 und 5 zeigen eine konkrete Ausführungsform einer erfindungsgemäßen Spindel. In diesen Figuren sind gleiche Elemente mit gleichen Bezugszeichen versehen.

Ein Ausführungsbeispiel für eine erfindungsgemäße Werkzeugspindel 31 umfasst ein Spindelgehäuse 32.

Innerhalb des Gehäuses 32 ist eine Antriebsgruppe 34 mit einem entsprechenden Motor ausgebildet. Letztendlich werden die Antriebskräfte auf eine Welle 35 aufgebracht.

Eine Werkzeugverstellvorrichtung 36 ist direkt in die Welle 35 integriert, in welche eine Werkzeugverstelleinheit 44 integriert ist. Eine Art Verschluss 45 wird von einer Werkzeugaufnahmeeinheit 41 durchragt. Eine Werkzeugschnittstelle nimmt ein Bearbeitungswerkzeug auf. Die Baugruppe 36/44 ist direkt in die Welle 35 integriert , sodass die Vorrichtung in Drehbewegung versetzt werden kann. Mittels der Kolbenbaugruppe 42 kann die Werkzeugverstelleinheit 44 um eine quer zur Antriebsachse bzw. quer zur Werkzeugdrehachse liegenden Achse verstellt werden. Befindet sich in der Werkzeugaufnahmeeinheit 41 beispielsweise ein Werkzeug mit einer Schneidplatte, kann durch Verstellen der Flugkreisradius der rotierenden Schneidplatte verändert werden.

An der Werkzeugverstelleinheit 44 ist ein Meßsensorbereich 40 angeordnet.

Die auf entsprechenden Schlitten und Schiebern sowie Schwenkeinrichtungen angeordnete Spindel 31 kann gegenüber einem feststehenden oder einem drehenden Werkstück relativ axial, radial und in sonstiger je nach Einsatzfall gewünschter Weise verschoben werden. Entsprechend kann das Werkzeug an die Oberfläche des Werkstücks zur entsprechenden Bearbeitung herangeführt werden. Als Werkzeug kann in die Werkzeugaufnahmeeinheit 41 auch ein einfacher Bohrer eingesetzt werden ebenso wie ein Fräser, gegebenenfalls unter Zwischenanordnung von Adaptern, Bohrfuttern und dergleichen. In diesem Fall ist es sinnvoll, die verstellbare Werkzeugverstelleinheit 44 gegen Verstellen zu verriegeln bzw. zu klemmen.

Der im Inneren der Spindel dargestellte Drehverteiler 39 dient der Führung von Hydraulik, Pneumatik und auch Kühlmittel, wozu entsprechende nicht gezeigte Anschlüsse vorgesehen sind. Über Anschlüsse 46 eines elektrischen Messsignalverteilers erfolgt eine Übertragung der Messsignale des Messsystems 10 an eine in den Figuren nicht näher gezeigte Steuerung.

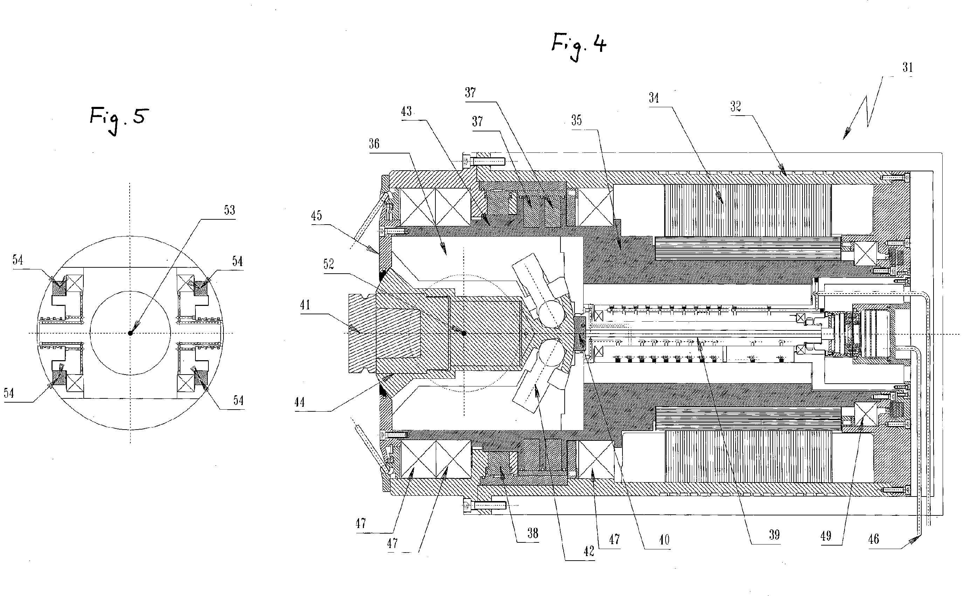

Wie insbesondere die Darstellung nach Fig. 4 erkennen lässt, erfolgt die Lagerung der Welle 35 der Spindel über eine Spindellagerung, die im gezeigten Ausführungsbeispiel über Kugellager 47 und 49 verfügt.

Die Werkzeugverstelleinheit 44 verschwenkt gegenüber der Welle 35 um die Schwenkachse 52, wie Figur 3 erkennen lässt. Der diesbezüglich maximale Schwenkbereich ist mit dem Bezugszeichen 51 identifiziert.

Erfindungsgemäß ist die verstellbare Werkzeugaufnahmeeinheit 41 in einem Gehäuse 43 angeordnet. Diese ist einstückig mit der Welle 35 ausgebildet.

Im gezeigten Ausführungsbespiel zeigt sich, dass die Antriebsgruppe/der Motor 34 nur eine Antriebsquelle umfasst.

Mit dem Bezugszeichen 37 sind Unwuchtkompensationsscheiben bezeichnet, welche verstellbar sind, um auf diese Weise Unwuchten zu kompensieren.

Die Spindel lässt sich grundsätzlich festsetzen, wozu die Spindelklemmung 38 einzusetzen ist. Auch ist die Verstellachse festsetzbar, wozu die Klemmen 54 für die Verstellachse eingesetzt ist, was die Figur 5 zeigt. Die Spindeldrehachse ist mit 53 bezeichnet.

Beim gezeigten Ausführungsbeispiel sind sämtliche Daten und Versorgungsleitungen durch den Drehverteiler 39 geführt.

Die Beschreibung des Ausführungsbeispiels dient nur der Erläuterung und ist nicht beschränkend.

### Bezugszeichen

- 1: Werkzeugspindel
- 2: Spindelgehäuse
- 3: Anbaueinheit
- 4: Antriebsgruppe
- 5: Welle
- 6: Werkzeugverstellvorrichtung
- 7: Basisplatte
- 8: Befestigungsschraube
- 9: Montageflansch
- 10: Messsensorbereich
- 11: Werkzeugaufnahmeeinheit
- 12: Kolbenbaugruppe
- 13: Gehäuse
- 14: Werkzeugverstelleinheit
- 15: Verschlussdeckel
- 16: Anschlüsse
- 17: vordere Lagerung
- 18: vordere Lagerung
- 19: hintere Lagerung
- 20: Schwenkbereich
- 21: Schwenkachse
- 31: Werkzeugspindel
- 32: Spindelgehäuse
- 34: Antriebsgruppe/Motor
- 35: Welle
- 36: Werkzeugverstellvorrichtung
- 37: Unwuchtkompensationsscheiben
- 38: Spindelklemmung
- 39: Drehverteiler
- 40: Meßsensorbereich
- 41: Werkezugaufnahmeeinheit
- 42: Kolbenbaugruppe
- 43: Gehäuse
- 44: Werkzeugverstelleinheit
- 45: Verschlussdeckel
- 46: Anschlüsse
- 47: vordere Lagerung
- 49: hintere Lagerung
- 51: Schwenkbereich
- 52: Schwenkachse
- 53: Spindeldrehachse
- 54: Klemmung Verstellachse

## Patentansprüche

1. Werkzeugspindel (1) mit einem Spindelgehäuse (2/32), einem Drehantrieb, welcher einen Antriebsmotor umfasst, wobei der Antriebsmotor auf eine rotierende Antriebswelle (5/35) wirkt, und einer um die Antriebwelle (5/35) drehbar angeordneten Werkzeugaufnahmeeinheit (11/41), welche über eine Getriebekette mit der Antriebswelle (5/35) verbunden und innerhalb des Spindelgehäuses (2/32) und diesem gegenüber bewegbar angeordnet ist, sowie mit einer Werkzeugverstelleinrichtung (6/36), die eine Werkzeugverstelleinheit (14/44) und die Werkzeugaufnahmeeinheit (11/41) umfasst, wobei die Werkzeugverstelleinheit (14/44) die Werkzeugaufnahmeeinheit (11/41) trägt,
**dadurch gekennzeichnet,**
**dass** die Werkzeugverstelleinrichtung (6/36) direkt in die Antriebswelle (5/35) integriert ist, wobei die Werkzeugverstelleinheit (14/44) und die Werkzeugaufnahmeeinheit (11/41) in einem Gehäuse (13/43) angeordnet sind und gegenüber dem Spindelgehäuse (2/32) um eine quer zur Antriebswelle (5/35) liegenden Achse bewegbar sind, wobei sich die Werkzeugverstelleinheit (14/44) innerhalb einer vorderen (17/47) und einer hinteren (19/49) Lagerung der Antriebswelle (5/35) befindet, wobei die vordere Lagerung (17/47) das Gehäuse (13/43) trägt.

2. Werkzeugspindel nach einem der vorhergehenden Ansprüche, **dadurch gekennzeichnet, dass** das Spindelgehäuse (2/32) te zylindrisch ausgebildet ist.

3. Werkzeugspindel nach einem der vorangehenden Ansprüche, **dadurch gekennzeichnet, dass** die Werkzeugaufnahmeeinheit (11/41) mittels einer Verriegelung der Werkzeugverstelleinheit (14/44) gegenüber der Antriebswelle (5/35) mechanisch verriegelbar ist.

4. Werkzeugspindel nach einem der vorangehenden Ansprüche, **dadurch gekennzeichnet, dass** innerhalb der Werkzeugspindel (1) Kanäle zur Kühlmittelführung ausgebildet sind.

5. Werkzeugspindel nach einem der vorangehenden Ansprüche, **dadurch gekennzeichnet, dass** wenigstens eine in der Getriebekette befindliche Einheit mit einer Einheit zur Unwuchtkompensation versehen ist.

6. Werkzeugspindel nach Anspruch 5, **dadurch gekennzeichnet, dass** die Einheit zur Unwuchtkompensation verschiebbare Unwuchtkompensationsscheiben (37) aufweist.

7. Werkzeugspindel nach einem der vorangehenden Ansprüche, **dadurch gekennzeichnet, dass** die Antriebswelle (5/35) verriegelbar ist.

## Claims

1. Tool spindle (1) comprising a spindle housing (2/32), a rotary drive including a drive motor, said drive motor acting on a rotating drive shaft (5/35), and a tool receiving unit (11/41) rotatably arranged around said drive shaft (5/35), which tool receiving unit is connected to the drive shaft (5/35) via a gear chain and is arranged movably within the spindle housing (2/32) and relative thereto, and comprising a tool adjustment device (6/36) including a tool adjusting unit (14/44) and the tool receiving unit (11/41), wherein the tool adjusting unit (14/44) supports the tool receiving unit (11/41),
**characterized in**
**that** the tool adjustment device (6/36) is directly integrated into the drive shaft (5/35), wherein the tool adjusting unit (14/44) and the tool receiving unit (11/41) are arranged in a housing (13/43) and are movable relative to the spindle housing (2/32) about an axis lying transversely to the drive shaft (5/35), wherein the tool adjusting unit (14/44) is located within a front (17/47) and a rear (19/49) bearing of the drive shaft (5/35), the front bearing (17/47) supporting the housing (13143).

2. Tool spindle according to one of the preceding claims, **characterized in that** the spindle housing (2/32) is cylindrical.

3. Tool spindle according to one of the preceding claims, **characterized in that** the tool receiving unit (11/41) can be mechanically locked relative to the drive shaft (5/35) by means of locking the tool adjusting unit (14/44).

4. Tool spindle according to one of the preceding claims, **characterized in that** channels for coolant guiding are formed inside the tool spindle (1).

5. Tool spindle according to one of the preceding claims, **characterized in that** at least one unit located in the gear chain is provided with a unit for unbalance compensation.

6. Tool spindle according to claim 5, **characterized in that** the unit for unbalance compensation has displaceable unbalance compensation discs (37).

7. Tool spindle according to one of the preceding claims, **characterized in that** the drive shaft (5/35) is lockable.

## Revendications

1. Broche d'outil (1) avec un boîtier de broche (2/32), un entraînement rotatif qui comprend un moteur d'entraînement, le moteur d'entraînement agissant sur un arbre d'entraînement rotatif (5/35), et une unité de logement d'outil (11/41) disposée de manière rotative autour de l'arbre d'entraînement (5/35), qui est reliée à l'arbre d'entraînement (5/35) par une chaîne de transmission et qui est disposée à l'intérieur du boîtier de broche (2/32) et mobile par rapport à celui-ci, ainsi qu'avec un dispositif de réglage d'outil (6/36) qui comprend une unité de réglage d'outil (14/44) et l'unité de logement d'outil (11/41), l'unité de réglage d'outil (14/44) portant l'unité de logement d'outil (11/41),
**caractérisée en ce que**
le dispositif de réglage d'outil (6/36) est intégré directement dans l'arbre d'entraînement (5/35), le dispositif de réglage d'outil (14/44) et l'unité de logement d'outil (11/41) étant disposés dans un boîtier (13/43) et étant mobiles par rapport au boîtier de broche (2/32) autour d'un axe transversal à l'arbre d'entraînement (5/35), l'unité de réglage d'outil (14/44) se trouvant à l'intérieur d'un palier avant (17/47) et d'un palier arrière (19/49) de l'arbre d'entraînement (5/35), le palier avant (17/47) portant le boîtier (13/43).

2. Broche d'outil selon l'une des revendications précédentes, **caractérisée en ce que** le boîtier de broche (2/32) est cylindrique.

3. Broche d'outil selon l'une des revendications précédentes, **caractérisée en ce que** l'unité de logement d'outil (11/41) peut être verrouillée mécaniquement par rapport à l'arbre d'entraînement (5/35) au moyen d'un verrouillage de l'unité de réglage d'outil (14/44).

4. Broche d'outil selon l'une des revendications précédentes, **caractérisée en ce que** des canaux sont formés à l'intérieur de la broche d'outil (1) pour le guidage du fluide de refroidissement.

5. Broche d'outil selon l'une des revendications précédentes, **caractérisée en ce qu'**au moins une unité se trouvant dans la chaîne de transmission est pourvue d'une unité de compensation de déséquilibre.

6. Broche d'outil selon la revendication 5, **caractérisée en ce que** l'unité de compensation de déséquilibre comporte des rondelles de compensation de déséquilibre (37) déplaçables.

7. Broche d'outil selon l'une des revendications précédentes, **caractérisée en ce que** l'arbre d'entraînement (5/35) est verrouillable.
